# EUROPEAN PATENT SPECIFICATION

(11) **EP 4 549 332 B1**
(45) Date of publication and mention of the grant of the patent: **28.01.2026**
(21) Application number: 24203931.1
(22) Date of filing: 01.10.2024
(51) Int. Cl.: B65D 5/42

(54) **FOLDING STRUCTURE OF CORRUGATED BOARD AND PRODUCTION METHOD THEREOF**
FALTSTRUKTUR FÜR WELLPAPPE UND HERSTELLUNGSVERFAHREN DAFÜR
STRUCTURE PLIABLE DE CARTON ONDULÉ ET SON PROCÉDÉ DE PRODUCTION

(30) Priority: 01.11.2023 JP 2023188003
(43) Date of publication of application: 07.05.2025
(73) Proprietor: Nihon Coffin Co., Ltd., Fuchu-shi Hiroshima 7260001 (JP)
(72) Inventor: Komaru, Yosimasa, Fuchu-shi, Hiroshima, 7260001 (JP); Hirayama, Takaaki, Fuchu-shi, Hiroshima, 7260001 (JP)
(74) Representative: Herrero & Asociados, S.L.

(56) References cited:
- JP-A- 2001 161 458
- JP-A- 2011 052 441
- JP-A- 2012 012 058
- JP-U- 3 000 301
- US-A1- 2018 072 451

## Description

### Field

The present disclosure relates to a folding structure of a corrugated cardboard and a production method of a folding structure of a corrugated cardboard.

### Background

The following Patent Document 1 discloses a cushioning material for packaging with V-shaped grooves in a corrugated cardboard material including a front liner, a core, a middle liner, and a rear liner. By utilizing the V-shaped grooves, the corrugated cardboard material is formed to have a substantially L-shaped cross section by folding the corrugated cardboard material so that groove wall parts are brought into contact with each other.

### Citation List

### Patent Literature

Patent Literature 1: Summary of Japanese Utility Model Publication No. H5-751.

A folding structure according to the preamble of claim 1 is known from JP 2001 161458 A.

### Summary

### Technical Problem

In the folding structure of a corrugated cardboard as disclosed in Patent Document 1, when the corrugated cardboard is folded so that the groove wall parts are brought into contact with each other, since the liner is compressed on an inner surface side of a corner formed by the folding, springback occurs after the corrugated cardboard is folded, and a force acts to displace side walls in a direction of separating from each other, making it difficult to keep corners in a folded state.

When the corner formed by folding the corrugated cardboard is observed from the outside, since the liner of the corrugated cardboard is forcibly compressed to form the corner, the shape of a ridge of the corner is disordered as if meandering in an extending direction, the apex of the corner is arc-shaped without sharpness, and the shape of the corner is unstable.

An object of the present disclosure is to provide a folding structure of a corrugated cardboard that can reduce springback occurring when a corrugated cardboard is folded and stabilize the shape of a corner, a corrugated cardboard product having the folding structure, or a production method of a folding structure of a corrugated cardboard.

### Solution to Problem

The above problem is solved by a folding structure of a corrugated cardboard including a first liner, a second liner, and a core interposed between the first liner and the second liner, wherein a decorative sheet is attached to an outer surface of the first liner, the corrugated cardboard is formed with a cutout portion including a first oblique side portion and a second oblique side portion having a shape of cutting out the second liner and the core, a cut surface of the first oblique side portion and a cut surface of the second oblique side portion are brought into contact with each other and the first liner and the decorative sheet form a corner when the corrugated cardboard is folded, the cutout portion is shaped such that a distance between the first oblique side portion and the second oblique side portion decreases from the second liner to the first liner, a recessed groove or a cut line portion disposed along an extending direction of the cutout portion is provided on an opposite side of a surface of the first liner where the decorative sheet is provided, and the recessed groove or the cut line portion is provided at a bottom portion of the cutout portion including the first oblique side portion and the second oblique side portion, the recessed groove is shaped to open in a width direction perpendicular to the extending direction of the cutout portion, or the cut line portion is shaped such that one cut line and another cut line are separated from each other in the width direction.

The above problem is solved by a production method of a folding structure of a corrugated cardboard including a first liner, a second liner, and a core interposed between the first liner and the second liner, wherein a decorative sheet is attached to an outer surface of the first liner, the production method includes forming a cutout portion including a first oblique side portion and a second oblique side portion by cutting out the second liner and the core of the corrugated cardboard and forming a recessed groove or a cut line portion disposed along an extending direction of the cutout portion, on an opposite side of a surface of the first liner where the decorative sheet is provided, and the cutout portion is shaped such that a distance between the first oblique side portion and the second oblique side portion decreases from the second liner to the first liner, the recessed groove is provided at a bottom portion of the cutout portion including the first oblique side portion and the second oblique side portion, the recessed groove is shaped to open in a width direction perpendicular to the extending direction of the cutout portion, or the cut line portion is shaped such that one cut line and another cut line are separated from each other in the width direction.

The above problem is solved by a corrugated cardboard coffin having the above folding structure or a corrugated cardboard product having the above folding structure.

In the folding structure of the corrugated cardboard, the corrugated cardboard product having the folding structure, or the production method of the folding structure (hereinafter, referred to as "folding structure or the like"), springback when folding a corner is reduced, meandering of a ridge of the corner is reduced, the apex of the corner is sharpened, and the shape of the corner is stable.

In the folding structure of the corrugated cardboard and the like, the recessed groove can have a shape of removing a material constituting the first liner by a predetermined width.

In the folding structure of the corrugated cardboard and the like, a width of the recessed groove can be 0.3 mm to 3 mm.

In the folding structure of the corrugated cardboard and the like, a depth of the recessed groove can be 10% to 50% of a thickness of the first liner.

In the folding structure of the corrugated cardboard and the like, the first oblique side portion and the second oblique side portion can be fixed by a bonding agent.

In the folding structure of the corrugated cardboard and the like, a cut line provided along an extending direction of the recessed groove can be provided in the recessed groove provided on the opposite side of the surface of the first liner where the decorative sheet is provided. According to this configuration, meandering of a ridge of the corner can be more reduced.

The present disclosure can provide a folding structure of a corrugated cardboard that can reduce springback occurring when a corrugated cardboard is folded and stabilize the shape of a corner, a corrugated cardboard product having the folding structure, or a production method of a folding structure of a corrugated cardboard.

### Brief Description of Drawings

Fig. 1 is a front view illustrating an example of a folding structure of a corrugated cardboard;
Fig. 2 is an enlarged view of a part surrounded by a one-dot chain line in Fig. 1;
Fig. 3 is a front view illustrating another example of a folding structure of a corrugated cardboard and is an enlarged view illustrating a part corresponding to the area surrounded by the one-dot chain line in Fig. 1;
Fig. 4 is a view schematically illustrating the state of compression occurring when the folding structure of the corrugated cardboard of Fig. 3 is folded;
Fig. 5 is a front view illustrating another example of a folding structure of a corrugated cardboard and is an enlarged view illustrating a part corresponding to the area surrounded by the one-dot chain line in Fig. 1;
Fig. 6 is a front view illustrating a state in which a corrugated cardboard is folded around a cutout portion;
Fig. 7 is a front view illustrating a folding structure of a corrugated cardboard according to a first example;
Fig. 8 is an enlarged view of a part surrounded by a one-dot chain line in Fig. 7;
Fig. 9 is a front view illustrating a folding structure of a corrugated cardboard according to a third example and is an enlarged view illustrating a part corresponding to the area surrounded by the one-dot chain line in Fig. 7;
Fig. 10 is a front view illustrating a folding structure of a corrugated cardboard according to a first comparative example which does not form part of the invention and is an enlarged view illustrating a part corresponding to the area surrounded by a one-dot chain line in Fig. 9;
Fig. 11 is a photograph of a corner of a specimen of the first example taken from above;
Fig. 12 is a 3D model of an area around the corner of the specimen of the first example;
Fig. 13 is a photograph of a corner of a specimen of a second example taken from above;
Fig. 14 is a 3D model of an area around the corner of the specimen of the second example;
Fig. 15 is a photograph of a corner of a specimen of a third example taken from above;
Fig. 16 is an enlarged photograph of a portion of Fig. 15;
Fig. 17 is a photograph of a corner of a specimen of the first comparative example taken from above;
Fig. 18 is an enlarged photograph of a portion of Fig. 17;
Fig. 19 is a 3D model of an area around the corner of the specimen of the first comparative example; and
Fig. 20 illustrates an implementation article of a folding structure of a corrugated cardboard of the present disclosure.

### Description of Embodiments

The following describes embodiments of a folding structure of a corrugated cardboard and a production method of the folding structure of the present disclosure, and examples of the use of the folding structure of the corrugated cardboard. The following embodiments are merely limited examples of the embodiments of the present disclosure, and the technical scope of the present disclosure is not limited to the illustrated embodiments.

### Folding Structure of Corrugated Cardboard

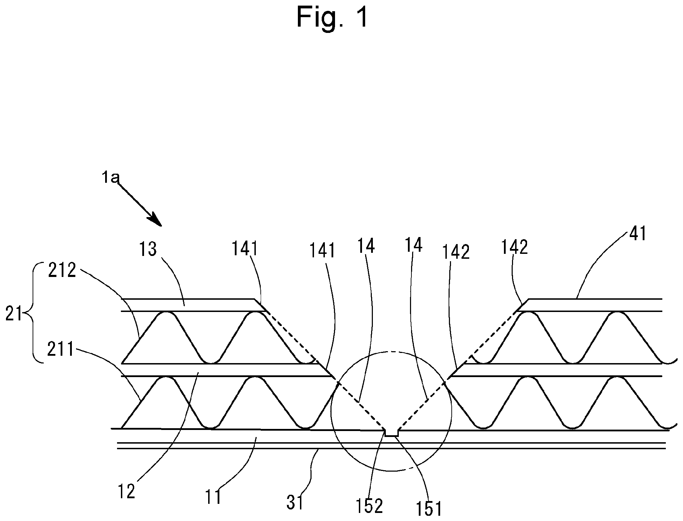

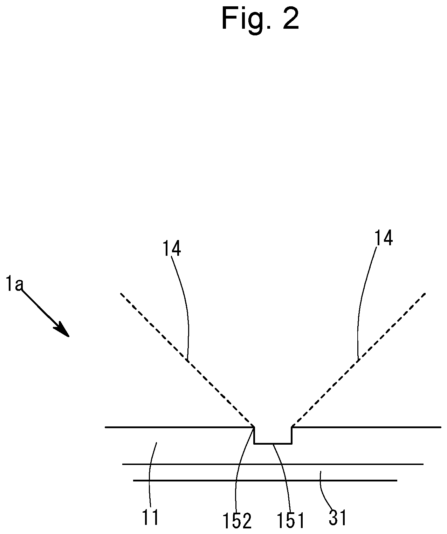

Figs. 1 and 2 illustrate one embodiment of a folding structure of a corrugated cardboard (hereinafter, simply referred to as a folding structure). A folding structure 1a of the present embodiment is applied to the corrugated cardboard having a first liner 11, a second liner 12, and a core 21 (first core) interposed between the first liner 11 and the second liner 12. As illustrated in Fig. 1, the corrugated cardboard 41 has a two-layered structure further including a second core 212 and a third liner 13.

The first liner 11, the second liner 12, and the third liner 13 are made of known materials constituting a general corrugated cardboard. The first liner 11, the second liner 12, and the third liner 13 are made of a cardboard. The thickness of each of the first liner 11, the second liner 12, and the third liner 13 is not particularly limited, but is, for example, 0.2 mm to 2 mm.

The core 21 is a sheet with a wavy finish called fluting. When a corrugated cardboard with one core 21 is a single-layer structure and a corrugated cardboard with two or more cores is a multi-layer structure, the number of layers of a corrugated cardboard to which a folding structure is applied is not limited and may be either a single layer or multiple layers. A folding structure of the present embodiment is applied to a corrugated cardboard having a two-layered structure.

The thickness of the core is not particularly limited, but is, for example, 0.3 mm to 6.0 mm. The thickness of the core refers to a distance between top and bottom apexes of a flute.

A decorative sheet 31 is attached to an outer surface of the first liner 11. A first core 211 is fixed to an inner surface of the first liner 11. The second liner 12 is fixed onto the first core 211. The second core 212 is fixed onto the second liner 12, and the third liner 13 is fixed onto the second core 212. An inner surface of the third liner 13 serves as an inner surface of the corrugated cardboard.

The corrugated cardboard 41 is formed with a cutout portion 14 including a first oblique side portion 141 and a second oblique side portion 142 formed by cutting out the second liner 12 and the first core 211. The first oblique side portion 141 and the second oblique side portion 142 are shaped to cut out the third liner 13 and the second core 212 as well. The cutout portion 14 is shaped such that a distance between the first oblique side portion 141 and the second oblique side portion 142 decreases from the second liner 12 to the first liner 11, and has an inclined surface that slopes downward toward the apex of a corner. The first oblique side portion 141 and the second oblique side portion 142 constitute a V-shaped recessed groove when the cutout portion 14 is viewed from the front. In Fig. 1, the first oblique side portion 141 and the second oblique side portion 142 are formed by cutting the corrugated cardboard with a blade. A surface through which the blade passes is indicated by a broken line in Fig. 1. The same also applies to Fig. 2 and subsequent drawings.

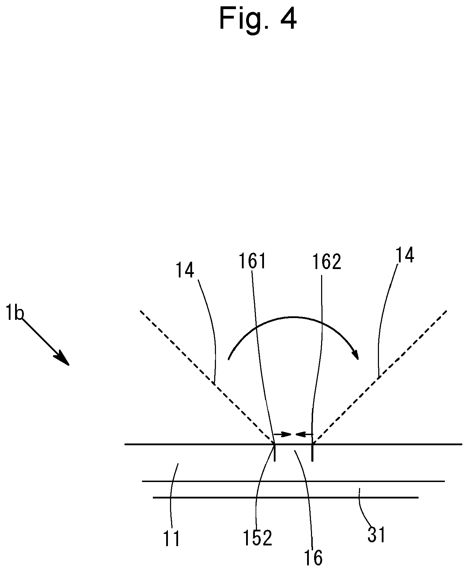

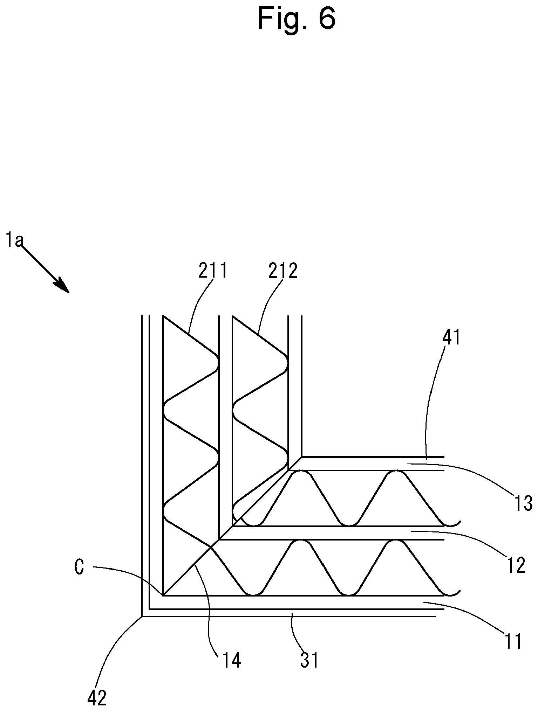

When one end of the corrugated cardboard is turned in the direction indicated by an arrow in Fig. 4 and the corrugated cardboard 41 is folded along the cutout portion 14, a cut surface of the first oblique side portion 141 and a cut surface of the second oblique side portion 142 are brought into contact with each other and the first liner 11 and the decorative sheet 31 form a corner 42 as illustrated in Fig. 6. The corner 42 is fixed by applying a bonding agent to the inner surface side of the corrugated cardboard. As a bonding agent, a known hot melt adhesive can be suitably used.

In the folding structure of the present embodiment, a recessed groove 151 disposed along the extending direction of the cutout portion 14 is provided on the opposite side of the surface of the first liner 11 where the decorative sheet 31 is provided. The recessed groove 151 is provided at a bottom portion 152 of the cutout portion 14 including the first oblique side portion 141 and the second oblique side portion 142. The recessed groove 151 is shaped to open in a width direction perpendicular to the extending direction of the cutout portion 14. The recessed groove 151 is formed by removing a material constituting the first liner 11 by a predetermined width and has a straight line shape extending along the extending direction of the cutout portion 14. When the material is removed by the predetermined width, a plurality of parallel cut lines may be made and the material may be removed along the cut lines.

The width of the recessed groove 151 can be 0.3 mm to 3 mm. The width of the recessed groove 151 is preferably 0.4 mm or more, and more preferably 0.8 mm or more. The width of the recessed groove 151 is preferably 2 mm or less, and more preferably 1.5 mm or less. The depth of the recessed groove 151 is smaller than the thickness of the first liner 11. The depth of the recessed groove 151 can be 10% to 50% of the thickness of the first liner. Once the depth of the recessed groove 151 exceeds the above range, the decorative sheet may tear near the apex of a folded portion when the first oblique side portion 141 and the second oblique side portion 142 are brought into contact with each other, so that the aesthetic appearance of the folding structure may be compromised.

The recessed groove 151 is preferably substantially square in shape when viewed from the front, with both sides forming the recessed groove extending in the direction of the thickness of the first liner. When both sides forming the recessed groove are extended in a sloping manner to form a substantially triangle in a front view, the decorative sheet may tear at the apex of the corner when the corrugated cardboard is folded to form the corner.

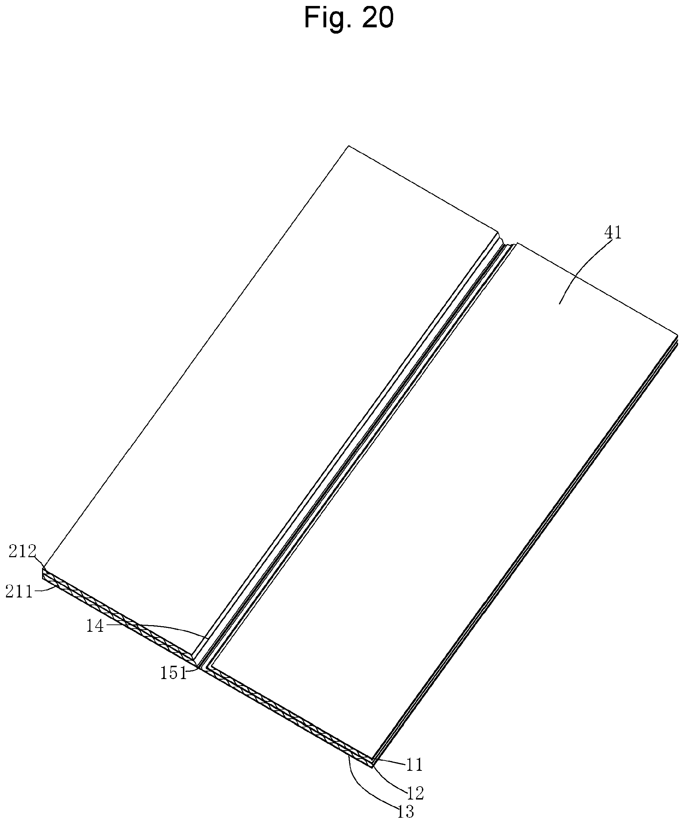

In the folding structure 1a of the present embodiment, as is clear from Fig. 20, the recessed groove 151 is shaped to open in the width direction perpendicular to the extending direction of the cutout portion. When the corrugated cardboard 41 is folded along the cutout portion 14, the first liner 11 and the decorative sheet 31 are folded along the recessed groove 151. When a corrugated cardboard with only the cutout portion 14 and no recessed groove 151 is folded, an inner surface of the corrugated cardboard is compressed, causing springback. The recessed groove 151 reduces the compression of the inner surface of the corrugated cardboard, thereby reducing the springback occurring when the corrugated cardboard is folded. In addition, meandering of the ridge of a corner formed when the corrugated cardboard 41 is folded is reduced, and a corner with a ridge extending in a straight line can be formed. The phenomenon in which the inner surface of the corrugated cardboard is compressed when the corrugated cardboard is folded mainly occurs at a point indicated by sign C in Fig. 6.

### Second Embodiment

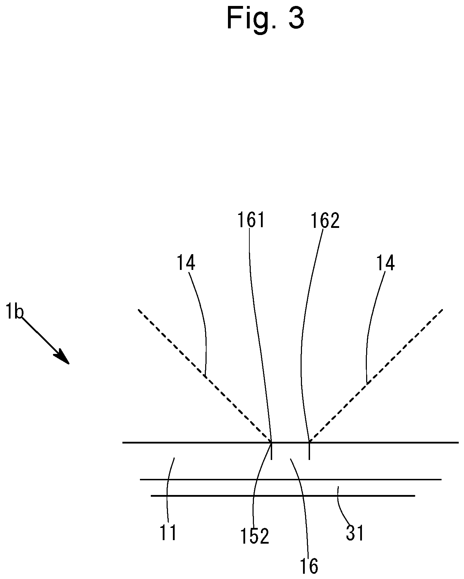

Figs. 3 and 4 illustrate a folding structure according to the second embodiment. A folding structure 1b of the present embodiment is different from the above folding structure 1a in that a cut line portion 16 is provided instead of the above recessed groove 151.

In the folding structure 1b of the present embodiment, the cut line portion 16 disposed along the extending direction of the cut line portion 14 is provided on the opposite side of the surface of the first liner 11 where the decorative sheet 31 is provided. The cut line portion 16 is provided at the bottom portion 152 of the cutout portion 14 including the first oblique side portion 141 and the second oblique side portion 142. The cut line portion 16 is shaped such that one cut line 161 and the other cut line 162 are separated from each other in the width direction. The width and depth of each of the cut lines 161 and 162 can be the same as those of the above recessed groove 151. The number of cut lines is not particularly limited and may be two or more.

The cut line of the cut line portion 16 is preferably placed downward.

When the corrugated cardboard 41 is folded along the cutout portion 14, the first liner 11 and the decorative sheet 31 are folded along the cut line portion 16. When the corrugated cardboard is folded, as indicated by an arrow in Fig. 4, an area where the inner surface of the corrugated cardboard 41 is compressed is limited to the inside of the outermost cut lines 161 and 162, and the inner surface of the corrugated cardboard 41 is compressed toward the inside of the cut lines 161 and 162. This causes regularity in the area where compression occurs on the inner surface of the corrugated cardboard so that the area follows the extending direction of the cut line portion 16. This reduces the springback occurring when the corrugated cardboard is folded. In addition, meandering of the ridge of a corner formed when the corrugated cardboard 41 is folded is reduced, and a corner with a ridge extending in a straight line can be formed.

### Third Embodiment

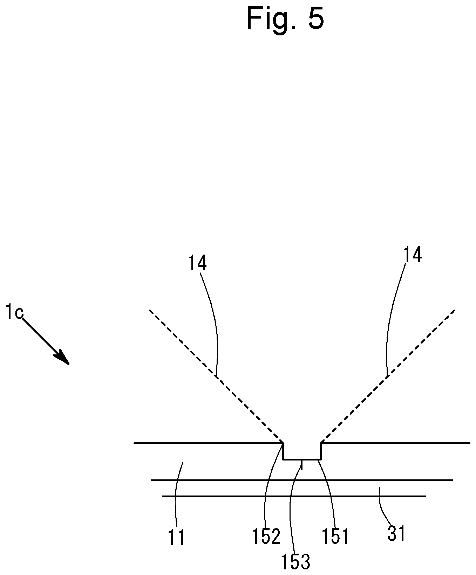

Fig. 5 illustrates a folding structure according to the third embodiment. A folding structure 1c of the present embodiment is different from the above folding structure 1a in that the recessed groove 151 of the folding structure 1a is further provided with a cut line 153.

The cut line 153 is provided along the extending direction of the recessed groove 151. The width of the cut line 153 is less than the width of the recessed groove 151. The width of the cut line 153 is not particularly limited, but can be 0.01 mm to 0.3 mm, for example. The depth of the cut line 153 is set not to penetrate the first liner 11. The depth of the cut line 153 is not particularly limited, but can be, for example, 8% to 22% of the thickness of the first liner.

By providing the cut line 153 in the recessed groove 151, the decorative sheet can be prevented from tearing near the apex of the corner when the corrugated cardboard is folded, and the meandering of the ridge of the corner can be reduced compared to the fold structure 1a including the recessed groove 151.

### Variation

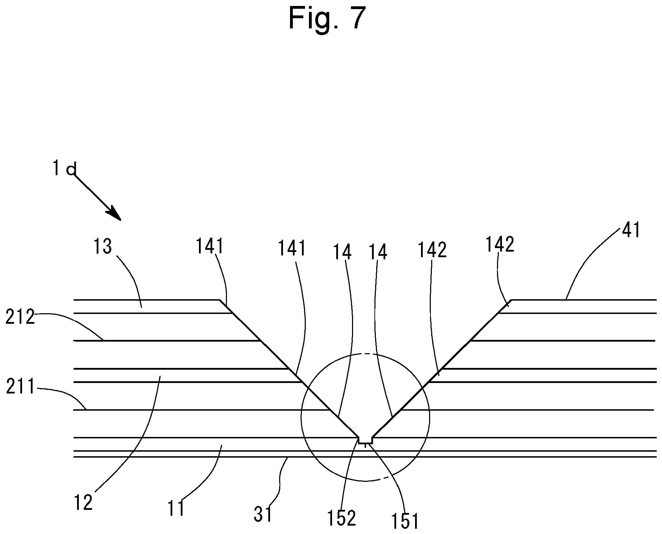

The recessed groove 151, the cut line 162, and the cut line 153 may be provided along the convex or concave portions of the concave and convex flutes constituting the core 21 as illustrated in Fig. 1, or may be provided in the direction of intersection with the convex or concave portions as illustrated in Fig. 7. When the corrugated cardboard is folded with the cutout portion 14 in the direction along the convex or concave portion, a portion of the convex or concave portion cut at the first oblique side portion 141 and the second oblique side portion 142 appears along the extending direction of the cutout portion. In this configuration, when the corrugated cardboard is folded, the area of contact between the first oblique side portion 141 and the second oblique side portion 142 becomes smaller, and the shape of the corner 42 is less stable. By applying the above folding structures 1a, 1b, and 1c, the shape of the corner 42 is more stable even when the recessed groove 151, the cut line 162, and the cut line 153 are provided in the direction along the convex or concave portion.

### Production Method of Folding Structure of Corrugated Cardboard

The above folding structure can be produced, for example, as follows. That is, in a production method of the folding structure of the corrugated cardboard having the first liner 11, the second liner 12, and the core 21 interposed between the first liner 11 and the second liner 12, the decorative sheet 31 is attached to the outer surface of the first liner 11, the production method includes a step of forming the cutout portion 14 including the first oblique side portion 141 and the second oblique side portion 142 by cutting out the second liner 12 and the core 21 of the corrugated cardboard and a step of forming the recessed groove 151 or the cut line portion 16 disposed along the extending direction of the cutout portion 14, on the opposite side of the surface of the first liner 11 where the decorative sheet 31 is provided, the cutout portion 14 is shaped such that the distance between the first oblique side portion 141 and the second oblique side portion 142 decreases from the second liner 12 to the first liner 11, the recessed groove 151 is provided at the bottom portion 152 of the cutout portion 14 including the first oblique side portion 141 and the second oblique side portion 142, the recessed groove 151 is shaped to open in the width direction perpendicular to the extending direction of the cutout portion 14, and the cut line portion 16 is shaped such that one cut line 161 and the other cut line 162 are separated from each other in the width direction.

The cutout portion 14 may be formed on the inner surface side of the corrugated cardboard by a known method. For example, the cutout portion 14 can be formed by a cutting device with a rotating blade having a cross-sectional shape corresponding to the cross-sectional shape of the cutout portion. After the cutout portion 14 is formed, a plurality of cut lines are placed at the bottom portion of the cutout portion 14. The first liner 11 between the one cut line 161 and the other cut line 162 can be easily removed by applying external force. This allows for the formation of the recessed groove 151. The width or depth of the recessed groove 151 can be adjusted by the distance between the one cut line 161 and the other cut line 162. The depth of the recessed groove 151 can be adjusted according to the depth of the cut line. When the first liner 11 surrounded by the one cut line 161 and the other cut line 162 is not removed and left in place, it becomes the cut line portion 16.

When the corrugated cardboard has a multi-layer structure with a plurality of cores, the first oblique side portion 141 and the second oblique side portion 142 are shaped to cut out a plurality of cores such as the first core 211, the second core 212, and a third core, and liners such as the second liner 12, the third liner 13, and a fourth liner other than the first liner 11. Once the first liner is damaged or cut when the cutout portion is formed, the shape of the corner after folding is affected. Accordingly, the first liner 11 is preferably not cut when the cutout portion 14 is formed. The number of liners and the number of cores vary depending on the number of layers of the corrugated cardboard.

The cut line 153 is provided at the bottom portion of the recessed groove 151. The cut line 153 can be formed, for example, by a blade with a width smaller than the width of the recessed groove 151 or the cut line portion 16.

### Example of Use

The above folding structure of the corrugated cardboard can be suitably used for corrugated cardboard products requiring beauty in corners formed by folding the corrugated cardboard. Examples of such corrugated cardboard products include corrugated cardboard coffins; tool boxes for holding tools therein; decorative boxes for holding food such as confectionery or electronic devices such as cell phones therein; other containers; and corrugated cardboard furniture such as cupboards, beds, tables, chairs, or chests. In the above corrugated cardboard products, the ridges of corners formed by folding the corrugated cardboard are meandering, or the apexes of the corners are not right angles but arcs with relatively large radii, giving the impression that the corrugated cardboard products have a low-cost appearance. In corrugated cardboard products employing the above folding structure of the corrugated cardboard have an appearance similar to that of wooden products, even though they are made of corrugated cardboard, because the angles of corners are close to right angles.

### Examples

The present disclosure is described more specifically below with reference to examples. The following examples are merely limited examples, and the technical scope of the present disclosure is not limited to the illustrated examples.

### First Example

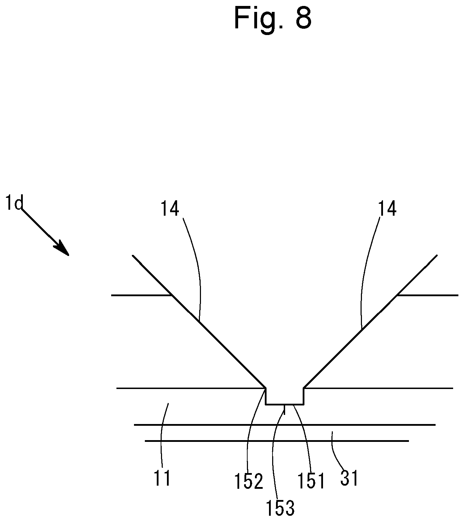

A folding structure 1d illustrated in Figs. 7 and 8 was produced by the following method. The folding structure 1d has the same configuration as the above folding structure 1c (Fig. 5). However, in the folding structure 1d, the cutout portion 14 is provided in a direction that intersects the extending direction of the convex or concave portion of the concave or convex flute constituting the core 21. A V-shaped cutout portion 14 was formed in a two-layered corrugated cardboard 41 to which a 60 µm thick decorative sheet 31 was attached, and the recessed groove 151 was formed at the bottom portion 152 of the cutout portion 14 including the first oblique side portion 141 and the second oblique side portion 142. The bottom portion of the recessed groove 151 is provided with the cut line 153 along the extending direction of the recessed groove 151. The width of an opening of the cutout portion 14 is 20 mm, an angle between the second oblique side portion 142 and the first liner 11 is 45°, and an angle between the first oblique side portion 141 and the first liner 11 is 135°.

The width of the recessed groove 151 is 1 mm and the depth of the recessed groove 151 is 40% of the thickness of the first liner 11. The depth of the cut line 153 is 16.6% of the thickness of the first liner.

The thickness of the first liner 11 is 0.6 mm, the thickness of the second liner 12 is 0.3 mm, and the thickness of the third liner 13 is 0.6 mm. The thickness of the first core 211 and the second core 212 are each 4 mm. The overall thickness of the corrugated cardboard is approximately 10 mm.

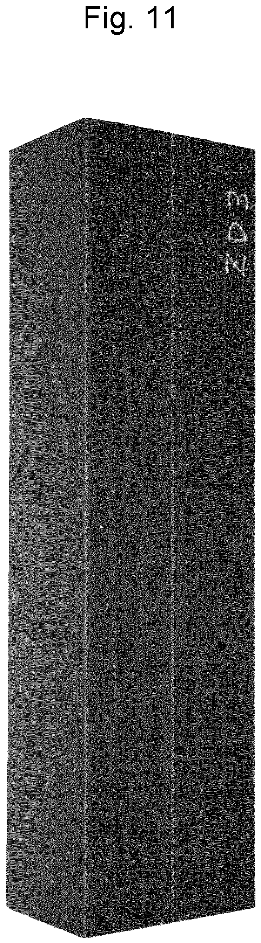

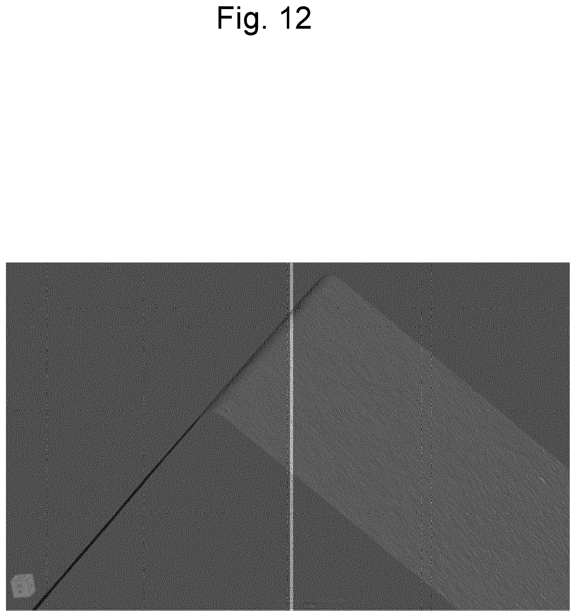

For the folding structure 1d of the corrugated cardboard produced in this way, the corrugated cardboard 41 was folded around the above cutout portion 14. Corners were fixed by applying a hot melt adhesive to the inner surface of the folded corrugated cardboard 41. Fig. 11 illustrates a photograph of the corners of the corrugated cardboard folded in this way. Specimens of the folded corrugated cardboard were photographed in one-shot using a 3D digitizer (COMET L3D25M from ZEISS) to acquire three-dimensional coordinate data. Fig. 12 illustrates a 3D model at the corners of the specimen produced based on the acquired three-dimensional coordinate data.

### Second Example

A folding structure according to a second example was produced by forming a cutout portion and a recessed groove extending along the extending direction of the cutout portion in a corrugated cardboard in the same manner as in the first example, except that the cut line was omitted. The folding structure is similar to that illustrated in Figs. 1 and 2. However, the folding structure has a difference in the shape of the cutout portion extending in a direction that intersects the extending direction of the convex and concave portions forming the flutes.

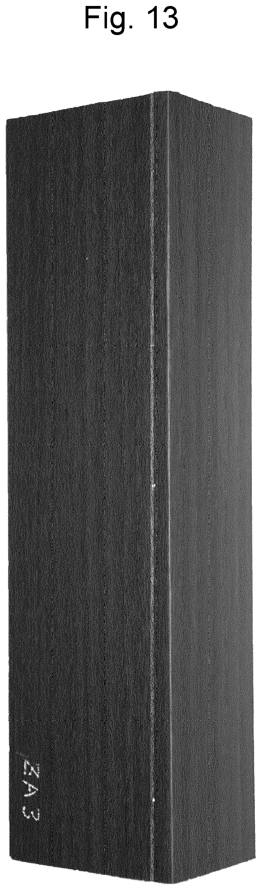

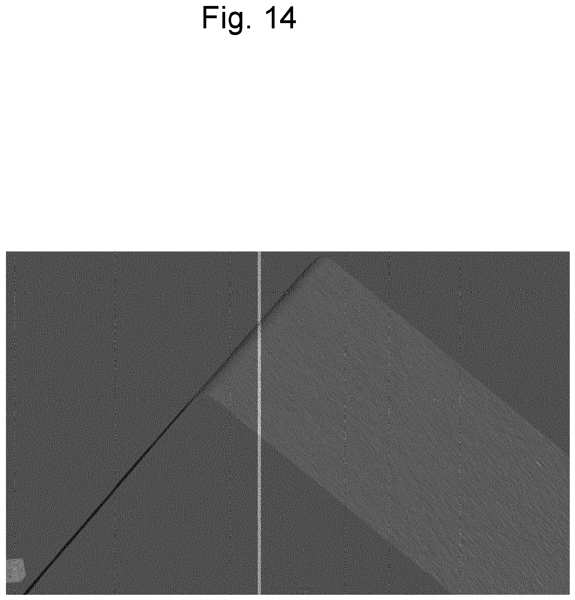

For the folding structure of the corrugated cardboard produced in this way, the corrugated cardboard was folded around the above cutout portion. Corners were fixed by applying a hot melt adhesive to the inner surface of the folded corrugated cardboard. Fig. 13 illustrates a photograph of the corners of the corrugated cardboard folded in this way. Specimens of the folded corrugated cardboard were photographed in one-shot using a 3D digitizer (COMET L3D25M from ZEISS) to acquire three-dimensional coordinate data. Fig. 14 illustrates a 3D model at the corner of the specimen produced based on the acquired three-dimensional coordinate data.

### Third Example

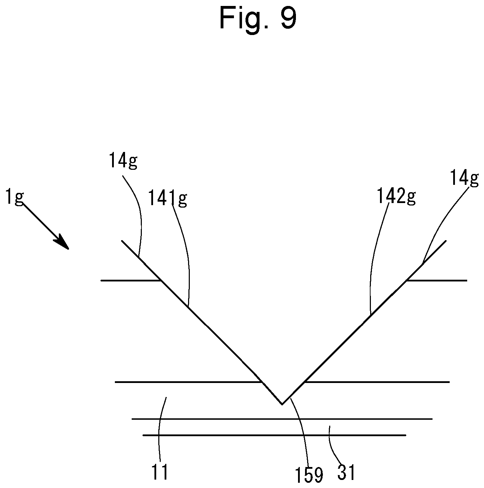

A flat blade inclined at an angle was inserted twice against the inner surface of the corrugated cardboard used in the first example to form a cutout portion 14g in the corrugated cardboard, the cutout portion 14g including a first oblique side portion 141g and a second oblique side portion 142g. The tip of the flat blade inclined at an angle reached halfway up the first liner 11. This allows the first liner 11 to have a recessed groove 159 with sloping oblique sides and a substantially triangle shape in a front view, at a bottom portion of the cutout portion 14g. In this way, a folding structure according to the third example illustrated in Fig. 9 was produced. The cutout portion was provided to intersect the extending direction of the convex and concave portions forming the flutes.

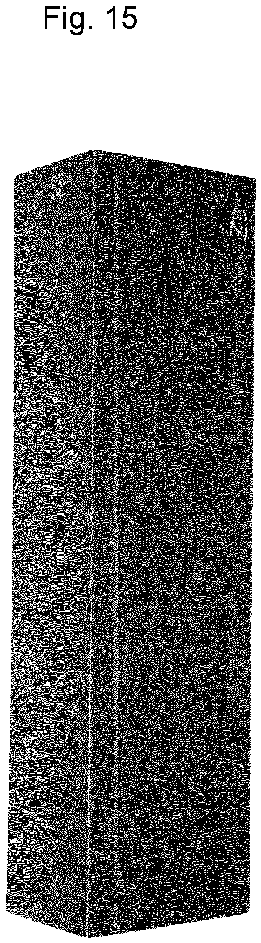

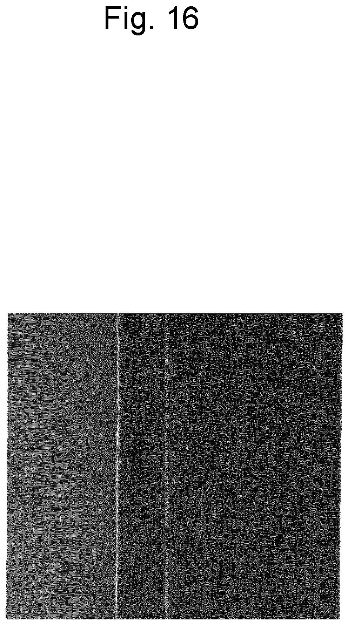

For the folding structure of the corrugated cardboard produced in this way, the corrugated cardboard was folded around the above cutout portion. Corners were fixed by applying a hot melt adhesive to the inner surface of the folded corrugated cardboard. Figs. 15 and 16 illustrate photographs of the corners of the corrugated cardboard folded in this way.

### First Comparative Example

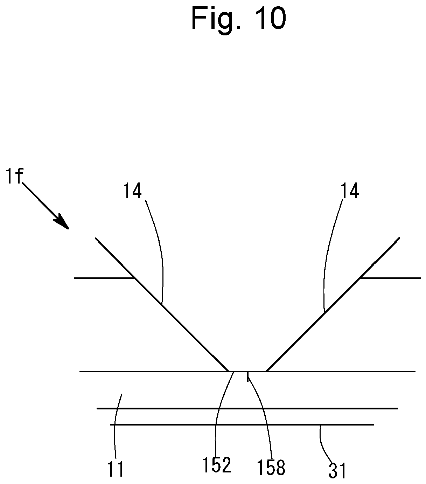

The cutout portion 14 was formed in the corrugated cardboard in the same manner as in the first example, except that the cutout line and the recessed groove were omitted, and a cutter knife was used to make a stripe 158 at the bottom portion 152 of the cutout portion 14 in order to serve as a starting point for the corner folding. The depth of the cut line is 0.2 mm. Fig. 10 illustrates a folding structure 1f, which does not form part of the invention, according to the first comparative example. The cutout portion 14 was provided to intersect the extending direction of the convex and concave portions forming the flutes.

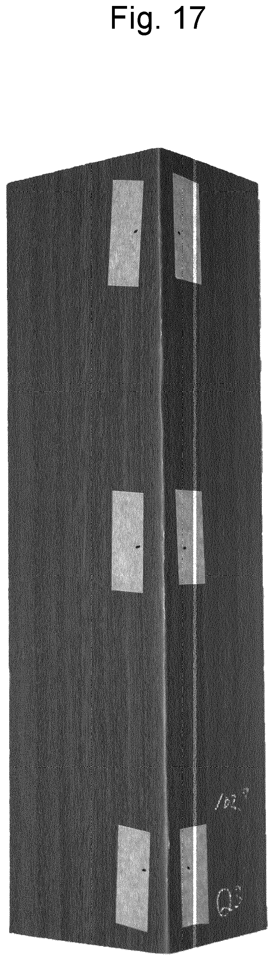

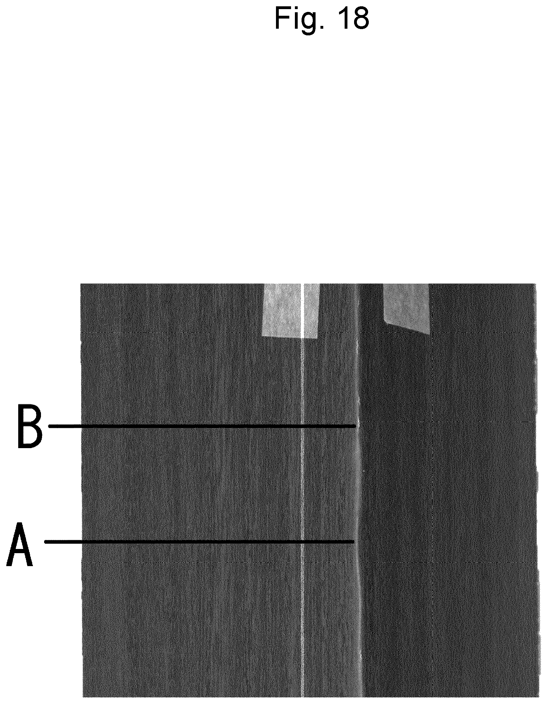

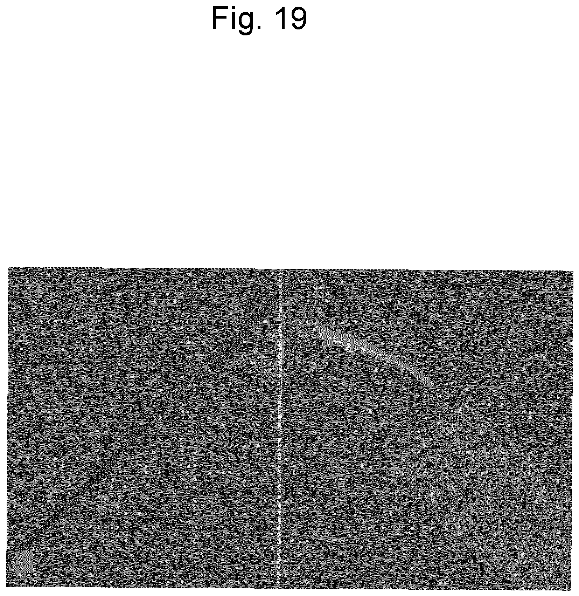

For the folding structure 1f of the corrugated cardboard produced in this way, the corrugated cardboard was folded around the above cutout portion. Corners were fixed by applying a hot melt adhesive to the inner surface of the folded corrugated cardboard. Figs. 17 and 18 illustrate photographs of the corners of the corrugated cardboard folded in this way. A 3D model of a specimen of the folded corrugated cardboard was produced at the corners of the specimen in the same manner as above. Fig. 19 illustrates the produced 3D model.

In the folding structures of the corrugated cardboards according to the first example, the second example, and the third example, the springback occurring when the corrugated cardboard is folded along the cutout portion was extremely reduced, and a small force was used to form the corner. On the other hand, in the folding structure of the corrugated cardboard according to the first comparative example, the springback occurring when the corrugated cardboard is folded along the cutout portion was so strong that the corrugated cardboard folded at the cutout portion was opened when a hand was released. This made the application of bonding agents extremely complicated.

As illustrated in Figs. 11 to 16, the folding structures of the corrugated cardboards according to the first example, the second example, and the third example had sharply bent corner apexes compared to the folding structure of the corrugated cardboard according to the first comparative example. As illustrated in Figs. 17 to 19, the folding structure of the corrugated cardboard according to the first comparative example was bent so that angles at the apexes of the corners were blunt compared to the folding structures of the corrugated cardboards according to the first to third examples. It is clear from the comparison of Figs. 12 and 14 and Fig. 19 that when the radius of a circle tangent to the apex of a folded portion is assumed, the radius of a virtual circle in the folding structures of the first and second examples is smaller than the radius of a virtual circle in the folding structure of the first comparative example. When the apex of the corner is sharp, it means that the apex of the corner appears closer to 90° in appearance as observed by the naked eye.

In the folding structures of the corrugated cardboards according to the first and second examples, as illustrated in Figs. 11 and 13, there were no tears in the decorative sheets around the apexes of the corners, and the corners maintained a beautiful appearance. In Figs. 11 and 13, the ridges reflect light and appear white. On the other hand, in the folding structure of the corrugated cardboard according to the first comparative example, as indicated by "B" in Fig. 18, a tear of the decorative sheet was observed around the apex of the corner, which was probably caused by the tension of the decorative sheet. As illustrated in Figs. 15 and 16, tears in the decorative sheet were observed around the apex of the corner in the folding structure of the corrugated cardboard according to the third example too. In the third example, the decorative sheet was torn over a wide area, extending along the ridge of the corner.

In the folding structure of the corrugated cardboard according to the first comparative example, the ridge of the corner meandered left and right as indicated by "A" in Fig. 18, and the beauty of the corner was severely compromised. On the other hand, as illustrated in Figs. 11 and 13 and Fig. 15, the ridges at the corners of the folding structures of the corrugated cardboards according to the first example, the second example, and the third example extended in a straight line along the direction of the recessed groove, and meandering of the ridges at the corners could not be observed with the naked eye. Tracing the ridges with a finger makes it possible to perceive that the folding structure of the corrugated cardboard in the first example had less meandering of the ridges than the folding structures of the corrugated cardboards in the second example and the third example, and that the ridges extended in a straight line.

### Reference Signs List

1a Folding structure
1b Folding structure
1c Folding structure
11 First liner
12 Second liner
41 Corrugated cardboard
31 Decorative sheet
21 Core
141 First oblique side portion
142 Second oblique side portion
14 Cutout portion
152 Recessed groove
159 Recessed groove
16 Cut line portion
161 Cut line
162 Cut line

## Claims

1. A folding structure (1a, 1b, 1c, 1d, 1g) of a corrugated cardboard (41) comprising a first liner (11), a second liner (12), and a core (21, 211, 212) interposed between the first liner (11) and the second liner (12), wherein
a decorative sheet (31) is attached to an outer surface of the first liner (11),
the corrugated cardboard (41) is formed with a cutout portion (14, 14g) including a first oblique side portion (141, 141g) and a second oblique side portion (142, 142g) formed having a shape of cutting out the second liner (12) and the core (21, 211, 212),
when the corrugated cardboard (41) is folded, a cut surface of the first oblique side portion (141, 141g) and a cut surface of the second oblique side portion (142, 142g) are brought into contact with each other and the first liner (11) and the decorative sheet (31) form a corner (42),
the cutout portion (14, 14g) is shaped such that a distance between the first oblique side portion (141, 141g) and the second oblique side portion (142, 142g) decreases from the second liner (12) to the first liner (11),
**characterized in that** a recessed groove (151, 159) or a cut line portion (16) disposed along an extending direction of the cutout portion (14, 14g) is provided on an opposite side of a surface of the first liner (11) where the decorative sheet (31) is provided, and
the recessed groove (151,159) or the cut line portion (16) is provided at a bottom portion of the cutout portion (14, 14g) including the first oblique side portion (141, 141g) and the second oblique side portion (142, 142g),
the recessed groove (151, 159) is shaped to open in a width direction perpendicular to the extending direction of the cutout portion (14, 14g), or the cut line portion (16) is shaped such that one cut line (161) and another cut line (162) are separated from each other in the width direction.

2. The folding structure (1a, 1c, 1d, 1g) of a corrugated cardboard (41) according to claim 1, wherein the recessed groove (151, 159) has a shape of removing a material constituting the first liner (11) by a predetermined width.

3. The folding structure (1a, 1c, 1d, 1g) of a corrugated cardboard (41) according to claim 1 or 2, wherein a width of the recessed groove (151, 159) is 0.3 mm to 3 mm.

4. The folding structure (1a, 1c, 1d, 1g) of a corrugated cardboard (41) according to claim 1 or 2, wherein a depth of the recessed groove (151, 159) is 10% to 50% of a thickness of the first liner (11).

5. The folding structure (1a, 1b, 1c, 1d, 1g) of a corrugated cardboard (41) according to claim 1 or 2, wherein the first oblique side portion (141, 141g) and the second oblique side portion (142, 142g) are fixed by a bonding agent.

6. The folding structure (1c, 1d) of a corrugated cardboard (41) according to claim 1 or 2, wherein a cut line (153) provided along an extending direction of the recessed groove (151) is provided in the recessed groove (151) provided on the opposite side of the surface of the first liner (11) where the decorative sheet (31) is provided.

7. The folding structure (1a, 1b, 1c, 1d, 1g) of a corrugated cardboard (41) according to claim 1 or 2, wherein the corrugated cardboard (41) has a multi-layer structure with a plurality of cores (21, 211, 212), and the first oblique side portion (141, 141g) and the second oblique side portion (142, 142g) are shaped to cut out the plurality of cores (21, 211, 212) and a liner other than the first liner (11).

8. A corrugated cardboard product having the folding structure (1a, 1b, 1c, 1d, 1g) according to claim 1 or 2.

9. A production method of a folding structure (1a, 1b, 1c, 1d, 1g) of a corrugated cardboard (41) according to any one of claims 1-7 comprising a first liner (11), a second liner (12), and a core (21) interposed between the first liner (11) and the second liner (12), wherein
a decorative sheet (31) is attached to an outer surface of the first liner (11),
the production method comprises: forming a cutout portion (14, 14g) comprising a first oblique side portion (141, 141g) and a second oblique side portion (142, 142g), by cutting out the second liner (12) and the core (21, 211, 212) of the corrugated cardboard; and forming a recessed groove (151, 159) or a cut line portion (16) disposed along an extending direction of the cutout portion (14, 14g), on an opposite side of a surface of the first liner (11) where the decorative sheet (31) is provided, and
the cutout portion (14, 14g) is shaped such that a distance between the first oblique side portion (141, 141g) and the second oblique side portion (142, 142g) decreases from the second liner (12) to the first liner (11),
the recessed groove (151, 159) is provided at a bottom portion of the cutout portion (14, 14g) including the first oblique side portion (141, 141g) and the second oblique side portion (142, 142g), the recessed groove (151, 159) is shaped to open in a width direction perpendicular to the extending direction of the cutout portion (14, 14g), or the cut line portion (16) is shaped such that one cut line (161) and another cut line (162) are separated from each other in the width direction.

10. The production method of a folding structure (1a, 1c, 1d, 1g) of a corrugated cardboard according to claim 9, wherein the recessed groove (151, 159) is formed by removing a material constituting the first liner (11) by a predetermined width.

## Patentansprüche

1. Eine Faltstruktur (1a, 1b, 1c, 1d, 1g), bestehend aus einer Wellpappe (41), die eine erste Decklage (11), eine zweite Decklage (12) und einen Kern (21, 211, 212) umfasst, der zwischen der ersten Decklage (11) und der zweiten Decklage (12) angeordnet ist, wobei
ein Dekorblatt (31) an einer Außenseite der ersten Decklage (11) befestigt ist,
die Wellpappe (41) mit einem Ausschnittabschnitt (14, 14g) ausgebildet ist, der einen ersten schrägen Seitenabschnitt (141, 141g) und einen zweiten schrägen Seitenabschnitt (142, 142g) umfasst, wobei diese so ausgebildet sind, dass die zweite Decklage (12) und der Kern (21, 211, 212) ausgeschnitten werden,
wenn die Wellpappe (41) gefaltet wird, eine Schnittfläche des ersten schrägen Seitenabschnitts (141, 141g) und eine Schnittfläche des zweiten schrägen Seitenabschnitts (142, 142g) miteinander in Kontakt gebracht werden und die erste Decklage (11) sowie das Dekorblatt (31) eine Ecke (42) bilden,
der Ausschnittabschnitt (14, 14g) so ausgebildet ist, dass ein Abstand zwischen dem ersten schrägen Seitenabschnitt (141, 141g) und dem zweiten schrägen Seitenabschnitt (142, 142g) von der zweiten Decklage (12) zur ersten Decklage (11) hin abnimmt,
**dadurch gekennzeichnet, dass** eine eingesenkte Nut (151, 159) oder ein Schnittlinienabschnitt (16), der entlang einer Erstreckungsrichtung des Ausschnittabschnitts (14, 14g) angeordnet ist, auf einer der ersten Decklage (11) gegenüberliegenden Seite einer Oberfläche vorgesehen ist, auf der das Dekorblatt (31) vorgesehen ist, und
die eingesenkte Nut (151, 159) oder der Schnittlinienabschnitt (16) an einem Bodenabschnitt des Ausschnittabschnitts (14, 14g) vorgesehen ist, der den ersten schrägen Seitenabschnitt (141, 141g) und den zweiten schrägen Seitenabschnitt (142, 142g) umfasst,
die eingesenkte Nut (151, 159) so ausgebildet ist, dass sie sich in einer Breitenrichtung öffnet, die senkrecht zur Erstreckungsrichtung des Ausschnittabschnitts (14, 14g) verläuft, oder der Schnittlinienabschnitt (16) so ausgebildet ist, dass eine Schnittlinie (161) und eine weitere Schnittlinie (162) in der Breitenrichtung voneinander beabstandet sind.

2. Die Faltstruktur (1a, 1c, 1d, 1g) aus Wellpappe (41) gemäß Anspruch 1, wobei die eingesenkte Nut (151, 159) so ausgebildet ist, dass ihre Form durch das Entfernen von Material, das die erste Decklage (11) bildet, über eine vorgegebene Breite bestimmt wird.

3. Die Faltstruktur aus Wellpappe (1a, 1c, 1d, 1g) gemäß Anspruch 1 oder 2, wobei eine Breite der eingesenkten Nut (151, 159) 0,3 mm bis 3 mm beträgt.

4. Die Faltstruktur aus Wellpappe (1a, 1c, 1d, 1g) gemäß Anspruch 1 oder 2, wobei eine Tiefe der eingesenkten Nut (151, 159) 10 % bis 50 % der Dicke der ersten Decklage (11) beträgt.

5. Die Faltstruktur aus Wellpappe (1a, 1b, 1c, 1d, 1g) gemäß Anspruch 1 oder 2, wobei der erste schräge Seitenabschnitt (141, 141g) und der zweite schräge Seitenabschnitt (142, 142g) durch ein Klebemittel fixiert sind.

6. Die Faltstruktur aus Wellpappe (1c, 1d) gemäß Anspruch 1 oder 2, wobei eine Schnittlinie (153), die entlang einer Erstreckungsrichtung der eingesenkten Nut (151) angeordnet ist, in der eingesenkten Nut (151) vorgesehen ist, die auf der der Oberfläche der ersten Decklage (11), auf der das Dekorblatt (31) vorgesehen ist, gegenüberliegenden Seite angeordnet ist.

7. Die Faltstruktur aus Wellpappe (1a, 1b, 1c, 1d, 1g) gemäß Anspruch 1 oder 2, wobei die Wellpappe (41) eine Mehrschichtstruktur mit einer Vielzahl von Kernen (21, 211, 212) aufweist und der erste schräge Seitenabschnitt (141, 141g) und der zweite schräge Seitenabschnitt (142, 142g) so ausgebildet sind, dass die Vielzahl von Kernen (21, 211, 212) sowie eine Decklage außer der ersten Decklage (11) ausgeschnitten werden.

8. Ein Wellpappeprodukt mit der Faltstruktur aus Wellpappe (1a, 1b, 1c, 1d, 1g) gemäß Anspruch 1 oder 2.

9. Ein Herstellungsverfahren einer Faltstruktur aus Wellpappe (1a, 1b, 1c, 1d, 1g) gemäß einem der Ansprüche 1-7, umfassend eine erste Decklage (11), eine zweite Decklage (12) und einen Kern (21), der zwischen der ersten Decklage (11) und der zweiten Decklage (12) angeordnet ist, wobei
ein Dekorblatt (31) an einer Außenseite der ersten Decklage (11) befestigt ist;
Das Herstellungsverfahren umfasst: die Bildung eines Ausschnittabschnitts (14, 14g), der einen ersten schrägen Seitenabschnitt (141, 141g) und einen zweiten schrägen Seitenabschnitt (142, 142g) umfasst, durch Ausschneiden der zweiten Decklage (12) und des Kerns (21, 211, 212) der Wellpappe; und die Bildung einer eingesenkte Nut (151, 159) oder eines Schnittlinienabschnitts (16), der entlang einer Erstreckungsrichtung des Ausschnittabschnitts (14, 14g) auf der der Oberfläche der ersten Decklage (11), auf der das Dekorblatt (31) vorgesehen ist, gegenüberliegenden Seite angeordnet ist, und
Der Ausschnittabschnitt (14, 14g) ist so geformt, dass der Abstand zwischen dem ersten schrägen Seitenabschnitt (141, 141g) und dem zweiten schrägen Seitenabschnitt (142, 142g) von der zweiten Decklage (12) zur ersten Decklage (11) abnimmt ;
Die eingesenkte Nut (151, 159) ist an einem unteren Abschnitt des Ausschnittabschnitts (14, 14g) angeordnet, der den ersten schrägen Seitenabschnitt (141, 141g) und den zweiten schrägen Seitenabschnitt (142, 142g) umfasst, die eingesenkte Nut (151, 159) ist so ausgebildet, dass sie sich in einer Breitenrichtung öffnet, die senkrecht zur Erstreckungsrichtung des Ausschnittabschnitts (14, 14g) verläuft, oder der Schnittlinienabschnitt (16) ist so ausgebildet, dass eine Schnittlinie (161) und eine weitere Schnittlinie (162) in der Breitenrichtung voneinander beabstandet sind.

10. Das Herstellungsverfahren einer Faltstruktur aus Wellpappe (1a, 1c, 1d, 1g) gemäß Anspruch 9, wobei die eingesenkte Nut (151, 159) durch Entfernen von Material, das die erste Decklage (11) bildet, über eine vorgegebene Breite gebildet wird.

## Revendications

1. Une structure pliable (1a, 1b, 1c, 1d, 1g) constituée d'un carton ondulé (41) comprenant une première feuille de couverture (11), une seconde feuille de couverture (12) et un noyau (21, 211, 212) interposé entre la première feuille de couverture (11) et la seconde feuille de couverture (12), dans lequel
une feuille décorative (31) est fixée à une surface externe de la première feuille de couverture (11),
le carton ondulé (41) est formé d'une portion découpée (14, 14g) comprenant une première portion latérale oblique (141, 141g) et une seconde portion latérale oblique (142, 142g) formées de manière à découper la seconde feuille de couverture (12) et le noyau (21, 211, 212),
lorsque le carton ondulé (41) est plié, une surface de coupe de la première portion latérale oblique (141, 141g) et une surface de coupe de la seconde portion latérale oblique (142, 142g) sont mises en contact l'une avec l'autre et la première feuille de couverture (11) et la feuille décorative (31) forment un coin (42),
la portion découpée (14, 14g) est façonnée de sorte qu'une distance entre la première portion latérale oblique (141, 141g) et la seconde portion latérale oblique (142, 142g) diminue depuis la seconde feuille de couverture (12) vers la première feuille de couverture (11),
**caractérisé en ce qu'**une rainure en creux (151, 159) ou une portion de la ligne de coupe (16) disposée le long d'une direction d'extension de la portion découpée (14, 14g) est prévue sur un côté opposé d'une surface de la première feuille de couverture (11) où la feuille décorative (31) est prévue, et
la rainure en creux (151, 159) ou la portion de ligne de coupe (16) est prévue au niveau d'une portion inférieure de la portion découpée (14, 14g) comprenant la première portion latérale oblique (141, 141g) et la seconde portion latérale oblique (142, 142g),
la rainure en creux (151, 159) est façonnée de manière à s'ouvrir dans une direction de largeur perpendiculaire à la direction d'extension de la portion découpée (14, 14g), ou la portion de ligne de coupe (16) est façonnée de sorte qu'une ligne de coupe (161) et une autre ligne de coupe (162) soient séparées l'une de l'autre dans la direction de largeur.

2. La structure pliable (1a, 1c, 1d, 1g) de carton ondulé (41) selon la revendication 1, dans laquelle la rainure en creux (151, 159) est formée de manière à ce que sa forme soit déterminée par le retrait d'un matériau constituant la première feuille de couverture (11) sur une largeur prédéterminée.

3. La structure pliable de carton ondulé (1a, 1c, 1d, 1g) selon la revendication 1 ou 2, dans laquelle une largeur de la rainure en creux (151, 159) est comprise entre 0,3 mm et 3 mm.

4. La structure pliable de carton ondulé (1a, 1c, 1d, 1g) selon la revendication 1 ou 2, dans laquelle une profondeur de la rainure en creux (151, 159) correspond à 10 % à 50 % de l'épaisseur de la première feuille de couverture (11).

5. La structure pliable de carton ondulé (1a, 1b, 1c, 1d, 1g) selon la revendication 1 ou 2, dans laquelle la première portion latérale oblique (141, 141g) et la seconde portion latérale oblique (142, 142g) sont fixées par un agent de collage.

6. La structure pliable de carton ondulé (1c, 1d) selon la revendication 1 ou 2, dans laquelle une ligne de coupe (153) prévue le long d'une direction d'extension de la rainure en creux (151) est disposée dans la rainure en creux (151) prévue sur le côté opposé d'une surface de la première feuille de couverture (11) sur laquelle la feuille décorative (31) est prévue.

7. La structure pliable de carton ondulé (1a, 1b, 1c, 1d, 1g) selon la revendication 1 ou 2, dans laquelle le carton ondulé (41) a une structure multi-couches comprenant une pluralité de noyaux (21, 211, 212), et la première portion latérale oblique (141, 141g) et la seconde portion latérale oblique (142, 142g) sont formées de manière à découper la pluralité de noyaux (21, 211, 212) ainsi qu'une feuille de couverture autre que la première feuille de couverture (11).

8. Un produit en carton ondulé comprenant la structure pliable (1a, 1b, 1c, 1d, 1g) selon la revendication 1 ou 2.

9. Un procédé de fabrication d'une structure pliable (1a, 1b, 1c, 1d, 1g) de carton ondulé (41) selon l'une quelconque des revendications 1 à 7, comprenant une première feuille de couverture (11), une seconde feuille de couverture (12) et un noyau (21) interposé entre la première feuille de couverture (11) et la seconde feuille de couverture (12), dans laquelle
une feuille décorative (31) est fixée à une surface externe de la première feuille de couverture (11) ;
Le procédé de fabrication comprend : la formation d'une portion découpée (14, 14g) comprenant une première portion latérale oblique (141, 141g) et une seconde portion latérale oblique (142, 142g), par découpe de la seconde feuille de couverture (12) et du noyau (21, 211, 212) du carton ondulé ; et la formation d'une rainure en creux (151, 159) ou d'une portion de ligne de coupe (16) disposée le long d'une direction d'extension de la portion découpée (14, 14g), sur un côté opposé d'une surface de la première feuille de couverture (11) sur laquelle la feuille décorative (31) est prévue, et
La portion découpée (14, 14g) est formée de manière que la distance entre la première portion latérale oblique (141, 141g) et la seconde portion latérale oblique (142, 142g) diminue de la seconde feuille de couverture (12) à la première feuille de couverture (11)
La rainure en creux (151, 159) est disposée au niveau d'une portion inférieure de la portion découpée (14, 14g) comprenant la première portion latérale oblique (141, 141g) et la seconde portion latérale oblique (142, 142g), la rainure en creux (151, 159) étant formée de manière à s'ouvrir dans une direction de largeur perpendiculaire à la direction d'extension de la portion découpée (14, 14g), ou la portion de ligne de coupe (16) est formée de sorte qu'une ligne de coupe (161) et une autre ligne de coupe (162) soient séparées l'une de l'autre dans la direction de largeur.

10. Le procédé de fabrication d'une structure pliable (1a, 1c, 1d, 1g) de carton ondulé selon la revendication 9, dans laquelle la rainure en creux (151, 159) est formée par le retrait d'un matériau constituant la première feuille de couverture (11) sur une largeur prédéterminée.
